# EUROPÄISCHE PATENTANMELDUNG

(11) **EP 2 449 999 A1**
(43) Veröffentlichungstag der Anmeldung: **09.05.2012**
(21) Anmeldenummer: 10190072.8
(22) Anmeldetag: 05.11.2010
(51) Int. Cl.: A61C 1/05, A61C 1/00

(54) **Fluidbetriebener medizinischer, insbesondere dentaler, Handgriff**

(71) Anmelder: W & H Dentalwerk Bürmoos GmbH, 5111 Bürmoos (AT)
(72) Erfinder: Rothenwänder, Michael, 5112, Lamprechtshausen (AT); Schmiedlechner, Karl, 5121, Ostermiething (AT); Schatz, Norbert, 5111, Bürmoos (AT)
(74) Vertreter: Benda, Ralf

(57) **Zusammenfassung**

Es werden ein medizinischer, insbesondere dentaler, fluidbetriebener Handgriff (1) mit einem Steuer- oder Regelkreis (8) zur Begrenzung, Steuerung oder Regelung der Drehzahl eines Drehteils (4) auf einen maximalen oder vorbestimmten Drehzahlwert und ein entsprechendes Verfahren offenbart. Der Handgriff (1) umfasst ein durch ein Antriebsfluid in Drehung versetzbares Drehteil (4) zum Antrieb eines Werkzeugs, eine Fluidleitung (5, 6) zur Leitung des Antriebsfluids zu oder von dem Drehteil (4) oder eine Fluidzweigleitung (7), die mit einer Fluidleitung (5, 6) zur Leitung des Antriebsfluids verbunden ist, und einen Steuer- oder Regelkreis (8), welcher ausgebildet ist, die Drehzahl des Drehteils (4) zu begrenzen, zu steuern oder zu regeln und der aufweist: Einen durch das Drehteil (4) angetriebenen elektrodynamischen Wandler (9) zur Erzeugung elektrischer Energie und zumindest ein Stellelement (10), welches ausgebildet ist, auf das in der Fluidleitung (5, 6) oder der Fluidzweigleitung (7) fließende Antriebsfluid einzuwirken, wobei das zumindest eine Stellelement (10) mit dem elektrodynamischen Wandler (9) elektrisch derart verbunden ist, dass das zumindest eine Stellelement (10) zur Durchführung eines Stellvorgangs mit der von dem elektrodynamischen Wandler (9) erzeugten elektrischen Energie versorgbar ist.

## Beschreibung

Die vorliegende Erfindung betrifft einen fluidbetriebenen medizinischen, insbesondere dentalen, Handgriff mit einem Drehteil und einem Steuer- oder Regelkreis zur Begrenzung, Steuerung oder Regelung der Drehzahl des Drehteils nach dem Oberbegriff des Anspruchs 1 und ein Verfahren zum Begrenzen, Steuern oder Regeln der Drehzahl des Drehteils.

Aus der Patentanmeldung US US2010/055642 A1 ist ein fluidbetriebener Handgriff mit einem Steuer- oder Regelkreis zur Drehzahlbegrenzung bekannt. Der Handgriff umfasst ein durch ein Antriebsfluid in Drehung versetzbaren Drehteil zum Antrieb eines mit dem Drehteil verbindbaren Werkzeugs, einen durch das Drehteil angetriebenen elektrodynamischen Wandler zur Induktion elektrischer Spannung und zumindest ein Schaltelement zum wahlweisen Öffnen und Schließen eines Stromkreises zwischen den beiden Enden einer Spule des elektrodynamischen Wandler, so dass bei geschlossenem Stromkreis in der Spule ein elektrischer Strom und ein die Drehzahl des Drehteils und des damit verbindbaren Werkzeugs abbremsendes Induktionsmagnetfeld induzierbar sind.

Der vorliegenden Erfindung liegt die Aufgabe zugrunde, einen fluidbetriebenen medizinischen, insbesondere dentalen, Handgriff mit einer alternativen Vorrichtung zum Begrenzen, Steuern oder Regeln der Drehzahl zu schaffen.

Gemäß einem Ausführungsbeispiel wird dies durch einen medizinischen, insbesondere dentalen, fluidbetriebenen Handgriff erreicht, der umfasst: Ein durch ein Antriebsfluid in Drehung versetzbares Drehteil zum Antrieb eines mit dem Drehteil verbindbaren Werkzeugs, eine Fluidleitung zur Leitung des Antriebsfluids zu dem oder von dem Drehteil oder eine Fluidzweigleitung, die mit einer Fluidleitung zur Leitung des Antriebsfluids zu dem oder von dem Drehteil verbunden ist, und einen Steuer- oder Regelkreis, welcher ausgebildet ist, die Drehzahl des Drehteils zu begrenzen, zu steuern oder zu regeln, wobei der Steuer- oder Regelkreis einen durch das Drehteil angetriebenen elektrodynamischen Wandler zur Erzeugung elektrischer Energie und zumindest ein Stellelement aufweist, welches ausgebildet ist, auf das in der Fluidleitung oder der Fluidzweigleitung fließende Antriebsfluid einzuwirken, wobei das zumindest eine Stellelement mit dem elektrodynamischen Wandler elektrisch derart verbunden ist, dass das zumindest eine Stellelement mit der von dem elektrodynamischen Wandler erzeugten elektrischen Energie zur Durchführung eines Stellvorgangs versorgbar ist.

Der Steuer- oder Regelkreis ist somit als auf das Antriebsfluid des Drehteils einwirkender Steuer- oder Regelkreis oder pneumatischer Steuer- oder Regelkreis ausgebildet. Der Steuer- oder Regelkreis verändert mittels des Stellelements unmittelbar einen Parameter des Antriebsfluids, zum Beispiel den Fluiddruck oder den Volumenstrom, wodurch die Drehzahl des Drehteils begrenzt, gesteuert, geregelt oder verändert wird.

Bevorzugt ist das zumindest eine Stellelement mit dem elektrodynamischen Wandler elektrisch auch derart verbunden, dass das Einwirken des Stellelements auf das Antriebsfluid in Abhängigkeit von der Drehzahl des Drehteils erfolgt. Die von dem elektrodynamischen Wandler erzeugte elektrische Energie wird demgemäß für zwei Zwecke verwendet: Erstens, dient sie zum Einwirken des Stellelements auf das Antriebsfluid oder zum Durchführen eines auf das Antriebsfluid einwirkenden Stellvorgangs durch das Stellelement, sie wird also von dem Stellelement benötigt, damit dieses eine Stellbewegung durchführen kann. Zweitens, ist aufgrund der, insbesondere positiven, Korrelation zwischen der von dem elektrodynamischen Wandler erzeugten elektrischen Energie und der Drehzahl des Drehteils (mit steigender Drehzahl nimmt die erzeugte elektrische Energie zu bzw. mit fallender Drehzahl nimmt die erzeugte elektrische Energie ab) die Drehzahl des Drehteils bestimmbar, bevorzugt durch eine Schalt- und / oder Steuervorrichtung. Damit ist es gemäß einem besonders bevorzugten Ausführungsbeispiel möglich, das Einwirken des Stellelements auf das Antriebsfluid nur bei Erreichen oder Überschreiten eines vorbestimmten Drehzahlwerts oder eines vorbestimmten Wertes der von dem elektrodynamischen Wandler erzeugten elektrischen Energie (welche dann zumindest teilweise als Schalt- und / oder Steuersignal verwendet wird) auszuführen.

Der elektrodynamische Wandler, im Folgenden auch als Generator bezeichnet, weist insbesondere einen Stator und einen Rotor auf, wobei der Rotor mit dem Drehteil verbunden ist oder als Teil des Drehteils ausgebildet ist. Das Drehteil umfasst zum Beispiel das durch das Antriebsfluid beaufschlagte Laufrad des Handgriffs, eine im Handgriff drehbar gelagerte Welle, zum Beispiel eine Hohlwelle zur lösbaren Aufnahme des Behandlungswerkzeugs, oder den Schaft eines im Handgriff aufnehmbaren Werkzeugs. Bevorzugt umfasst der Rotor ein Magnetelement und der Stator zumindest eine Spule, selbstverständlich ist jedoch auch eine umgekehrte Ausgestaltung möglich. Bevorzugt ist das Magnetelement am Drehteil vorgesehen ist, so dass das Magnetelement durch das Drehteil in Drehung versetzbar ist. Besonders bevorzugt ist das Magnetelement als Permanentmagnet ausgebildet, insbesondere als Scheibenmagnet, der am Drehteil befestigt ist. Alternativ ist das Drehteil selbst magnetisch, zum Beispiel aufgrund seiner Herstellung aus magnetischem Material oder durch Aufmagnetisierung.

Der Steuer- oder Regelkreis begrenzt, steuert oder regelt die Drehzahl des Drehteils und des damit verbindbaren Werkzeugs auf einen Maximal- oder Vorgabewert, insbesondere bei schwacher Belastung oder bei Leerlauf des Handgriffs, um damit die Lärmemission des Handgriffs zu verringern und die mechanische Belastung der im Handgriff befindlichen, das Drehteil lagernden Kugellager zu verringern. Auch ermöglicht die Drehzahlbegrenzung ein sanfteres Aufsetzen des Werkzeugs auf die Behandlungsstelle. Gemäß einem Ausführungsbeispiel ist der Steuer- oder Regelkreis ausgebildet, die Drehzahl des Drehteils und des Werkzeugs auf einen Wert im Bereich von etwa 300.000 - 150.000 Umdrehungen pro Minute, bevorzugt auf einen Wert im Bereich von etwa 275.000 - 200.000 Umdrehungen pro Minute, besonders bevorzugt auf in etwa 250.000 Umdrehungen pro Minute.

Gemäß einem Ausführungsbeispiel ist die zumindest eine Spule um einen weichmagnetischen Spulenkern gewickelt, der den magnetischen Fluss des Magnetelements des Generators bündelt und zur Spule lenkt. Insbesondere ist der aus einer oder mehreren, bevorzugt elektrisch voneinander isolierten, Schichten bestehende weichmagnetische Spulenkern ringförmig geformt und umgibt das Magnetelement an seinem Außenumfang. Damit wird, insbesondere wenn der elektrodynamische Wandler mehrere Spulen umfasst, deren Einbau im Handgriff erleichtert.

Gemäß einem anderen Ausführungsbeispiel ist das zumindest ein Stellelement als mittels elektrischer Energie betreibbares, insbesondere mechanisches, Stellelement ausgebildet, zum Beispiel als Ventil, insbesondere als Steuerventil oder als Proportionalventil, besonders bevorzugt als Magnetventil, oder als Drossel. Bevorzugt sind das Ventil oder die Drossel direkt an oder in der Leitung des Antriebsfluids zu oder von dem Drehteil oder direkt an oder in der Fluidzweigleitung vorgesehen.

Gemäß einem weiteren Ausführungsbeispiel verbindet die Fluidzweigleitung die Fluidleitung zur Leitung des Antriebsfluids zu dem Drehteil und die Fluidleitung zur Leitung des Antriebsfluids von dem Drehteil. Alternativ entspringt die Fluidzweigleitung an der Fluidleitung zur Leitung des Antriebsfluids zu dem Drehteil und mündet in einen Hohlraum einer hohlen Außenhülse des Handgriffs. Beiden Alternativen ermöglichen somit in vorteilhafter Weise, dass ein für den Antrieb des Drehteils nicht benötigter Anteil des Antriebsfluids über die Fluidzweigleitung ableitbar ist.

Um einen gleichmäßigen Betrieb des Drehteils zu erzielen, weist gemäß einem Ausführungsbeispiel die Fluidleitung zur Leitung des Antriebsfluids zu dem oder von dem Drehteil eine Nebenleitung auf, welche das Stellelement umgeht, so dass zumindest eine Teil des Antriebsfluids an dem Stellelement vorbeileitbar ist. Die Versorgung des Drehteils mit Antriebsfluid setzt sich demgemäß aus einem kontinuierlich fließenden oder konstanten Antriebsfluidstrom und einem durch das Einwirken des Stellelements veränderbaren Antriebsfluidstrom zusammen.

Gemäß einem Ausführungsbeispiel weist der Steuer- oder Regelkreis eine Schalt- und / oder Steuervorrichtung auf, welche zur selektiven Versorgung des zumindest einen Stellelements mit vom elektrodynamischen Wandler erzeugter elektrischer Energie in Abhängigkeit von der Drehzahl des Drehteils ausgebildet ist. Wie im Vorstehenden bereits erläutert ist es damit möglich, das Einwirken des Stellelements auf das Antriebsfluid von der Drehzahl des Drehteils abhängig zu machen oder das Einwirken des Stellelements auf das Antriebsfluid in Abhängigkeit von der Drehzahl des Drehteils zu steuern. Bevorzugt wird die von dem elektrodynamischen Wandler erzeugte elektrische Energie (aufgrund des direkten Zusammenhangs von Drehzahl des Drehteils und erzeugter elektrischer Energie) dabei zumindest teilweise auch als Schalt- und / oder Steuersignal verwendet. Bevorzugt lässt die Schalt- und / oder Steuervorrichtung die Versorgung des Stellelements mit von dem elektrodynamischen Wandler erzeugter elektrischer Energie oder das Einwirken des Stellelements auf das Antriebsfluid nur zu, wenn die Drehzahl des Drehteils einen vorbestimmten Wert erreicht oder überschreitet, zum Beispiel in etwa 200.000 U/min oder in etwa 250.000 U/min oder in etwa 275.000 U/min.

Gemäß einem bevorzugten Ausführungsbeispiel weist die Schalt- und / oder Steuervorrichtung eine Vorrichtung zur Ermittlung der Drehzahl des Drehteils auf. Die Vorrichtung zur Ermittlung der Drehzahl des Drehteils kann durch Bauteile gebildet sein, welche zum Beispiel direkt oder indirekt die von dem elektrodynamischen Wandler erzeugte elektrische Energie oder einen Wert der von dem elektrodynamischen Wandler erzeugten elektrischen Energie zur Ermittlung der Drehzahl des Drehteils verwenden. Derartige Bauteile können insbesondere durch einen Mikrocontroller oder durch eine Strahlungsquelle und ein Strahlung empfangendes Halbleiterelement gebildet sein, so wie dies im Folgenden noch detaillierter ausgeführt ist.

Alternativ kann die Vorrichtung zur Ermittlung der Drehzahl des Drehteils Bauteile aufweisen, welche die Drehzahl des Drehteils nicht von der von dem elektrodynamischen Wandler erzeugten elektrischen Energie ableiten. Derartige Bauteile können zum Beispiel durch einen Sensor zum Erfassen von Druckschwankungen im Antriebsfluid, insbesondere durch ein Mikrofon, das den vom Drehteil emittierten und sich in Abhängigkeit der Drehzahl verändernden Schall oder Änderungen der Strömungsgeschwindigkeit des Antriebsfluids detektiert, oder durch eine optische Erfassungsvorrichtung, welche zum Beispiel eine von dem Drehteil emittierte, reflektierte oder durch das Drehteil geleitete Strahlung detektiert, gebildet sein.

Gemäß einem besonders bevorzugten Ausführungsbeispiel umfasst die Schalt- und / oder Steuervorrichtung einen Mikrocontroller, welcher elektrisch mit dem elektrodynamischen Wandler verbunden ist und welcher ausgebildet ist, einen Wert der von dem elektrodynamischen Wandler erzeugten elektrischen Energie, insbesondere die Spannung, mit einem vorbestimmten Grenzwert zu vergleichen und die Versorgung des Stellelements mit von dem elektrodynamischen Wandler erzeugter elektrischer Energie zuzulassen, wenn der Wert der von dem elektrodynamischen Wandler erzeugten elektrischen Energie den vorbestimmten Grenzwert erreicht oder überschreitet.

Gemäß einem alternativen Ausführungsbeispiel umfasst die Schalt- und / oder Steuervorrichtung eine Strahlungsquelle und einen Strahlung empfangenden Sensor, insbesondere ein Halbleiterelement, zum Beispiel eine Photodiode, wobei die Strahlungsquelle von dem elektrodynamischen Wandler mit elektrischer Energie versorgbar ist und der Strahlung empfangende Sensor derart angeordnet ist, dass er von der Strahlungsquelle emittierte Strahlung empfängt, so dass ein Stromkreis zwischen dem elektrodynamischen Wandler und dem Stellelement schließbar ist und das Stellelement mit von dem elektrodynamischen Wandler erzeugter elektrischer Energie versorgbar ist, wenn der Sensor detektiert, dass die Strahlungsquelle Strahlung emittiert oder Strahlung emittiert, welche einen vorbestimmten Grenzwert überschreitet. Die Strahlungsquelle ist insbesondere derart ausgebildet, dass sie erst dann Strahlung emittiert, wenn die ihr zugeführte, vom Generator erzeugte, elektrische Energie einen Schwellenwert überschreitet. Die Strahlungsquelle ist zum Beispiel als Leuchtdiode ausgebildet.

Gemäß einem bevorzugten Ausführungsbeispiel umfasst der elektrodynamische Wandler mehrere Spulen, wobei zumindest eine erste Spule ausschließlich für die Versorgung des Stellelements mit elektrischer Energie vorgesehen ist, insbesondere zur Durchführung des Stellvorgangs, und wobei zumindest eine zweite Spule ausschließlich für die Versorgung der Schalt- und / oder Steuervorrichtung mit elektrischer Energie vorgesehen ist, insbesondere zur Erzeugung eines Schalt- und / oder Steuersignals für das Stellelement. Auf diese Weise wird, insbesondere wenn mehrere erste Spulen ausschließlich für die Versorgung des Stellelements mit elektrischer Energie vorgesehen sind, eine zuverlässige und ausreichende Energieversorgung des Stellelements gewährleistet.

Um eine zuverlässige Funktion des Stellelements und bevorzugt auch der Schalt- und / oder Steuervorrichtung zu erreichen, weist gemäß einem Ausführungsbeispiel der Steuer- oder Regelkreis eine Vorrichtung zum Gleichrichten der von dem elektrodynamischen Wandler erzeugten elektrischen Energie auf, so dass das Stellelement und bevorzugt auch die Schalt- und / oder Steuervorrichtung mit Gleichstrom versorgbar sind.

Gemäß einem bevorzugten Ausführungsbeispiel ist der gesamte Steuer- oder Regelkreis im Handgriff und / oder in einem an den Handgriff anschließbaren Anschlussteil, insbesondere in einem Adapter oder in einem Kupplungselement, aufgenommen und ist das Stellelement, und besonders bevorzugt auch die Schalt- und / oder Steuervorrichtung, von einer außerhalb des Handgriffs und / oder des Anschlussteils angeordneten elektrischen Energiequelle unabhängig. Damit ist in vorteilhafter Weise der Steuer- oder Regelkreis voll funktionsfähig, wenn der Handgriff an eine rein pneumatische Versorgungseinheit angeschlossen ist.

Ein Verfahren zur Begrenzung, Steuerung oder Regelung der Drehzahl eines medizinischen, insbesondere dentalen, fluidbetriebenen Handgriffs ist dadurch definiert, dass der durch das Drehteil angetriebenen elektrodynamischen Wandler elektrische Energie erzeugt und dass das Stellelement auf das in der Fluidleitung oder der Fluidzweigleitung fließende Antriebsfluid einwirkt, um die Drehzahl zu begrenzen, zu steuern oder zu regeln, wobei das zumindest eine Stellelement mit dem elektrodynamischen Wandler elektrisch derart verbunden ist, dass das zumindest eine Stellelement zur Durchführung eines Stellvorgangs mit der von dem elektrodynamischen Wandler erzeugten elektrischen Energie versorgt wird.

Die Erfindung wird nachfolgend anhand bevorzugter Ausführungsbeispiele und Bezug nehmend auf die beigefügten Zeichnungen erläutert:
Figur 1 zeigt eine Außenansicht eines medizinischen, insbesondere dentalen, fluidbetriebenen Handgriffs mit einem Steuer- oder Regelkreis zur Begrenzung, Steuerung oder Regelung der Drehzahl auf einen maximalen oder vorbestimmten Drehzahlwert.

Die Figuren 2 - 8 zeigen Schnittdarstellungen unterschiedlicher Ausführungsbeispiele medizinischer, insbesondere dentaler, fluidbetriebener Handgriffe mit einem Steuer- oder Regelkreis zur Begrenzung, Steuerung oder Regelung der Drehzahl auf einen maximalen oder vorbestimmten Drehzahlwert, welcher ein Stellelement aufweist, das von einem elektrodynamischen Wandler mit elektrischer Energie versorgt wird.

Die Figur 9 zeigt eine medizinische, insbesondere dentale, Behandlungsvorrichtung mit einer Steuer- und / oder Regelvorrichtung zur Steuerung und / oder Regelung der Drehzahl des Drehteils.

Die Figuren 10 und 11 zeigen Schnittdarstellungen durch medizinische, insbesondere dentale, fluidbetriebene Handgriffe zur Verwendung mit einer medizinischen, insbesondere dentalen, Behandlungsvorrichtung der Figur 9.

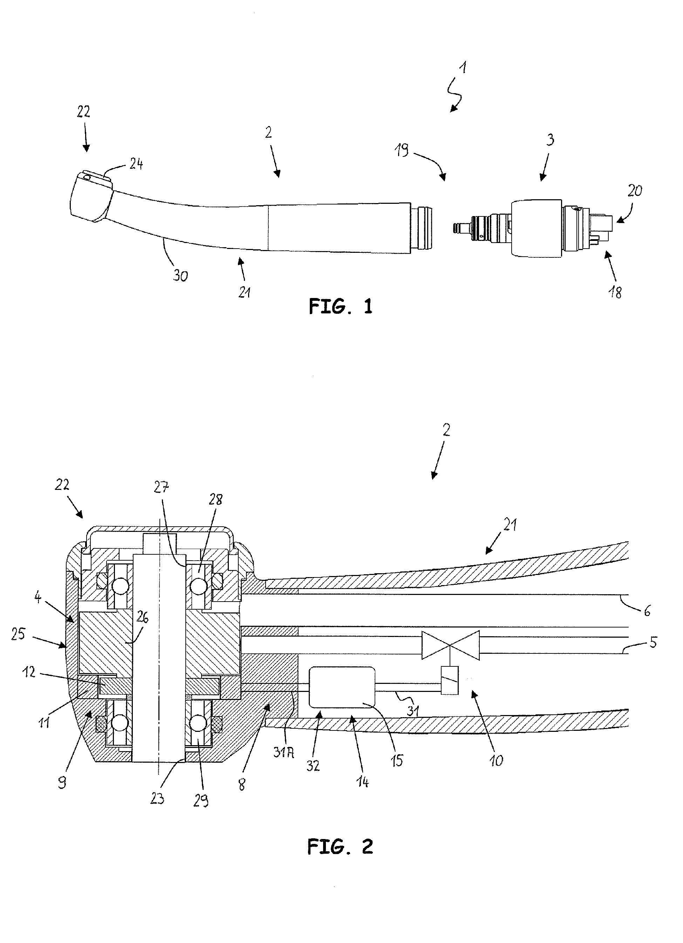

Der in der Figur 1 dargestellte medizinische, insbesondere dentale, fluidbetriebene Handgriff 1 ist als längliches, rohrförmiges Instrument ausgebildet, das an einem Ende einen Anschluss 18 an eine oder mehrere Medienquellen, zum Beispiel an eine Fluidquelle, insbesondere an eine Druckluftquelle, aufweist. Der Handgriff 1 besteht gemäß Figur 1 aus zwei Teilen, nämlich einem Handstück 2 und einem mit dem Handstück 2 verbindbaren Anschlussteil 3, welches zum Beispiel als Kupplung oder Adapter ausgebildet ist. Das Anschlussteil 3 und das Handstück 2 sind mittels einer Kupplungsvorrichtung 19 lösbar miteinander verbindbar. Der gemäß Figur 1 am versorgungsseitigen Ende des Anschlussteils 3 vorgesehene Anschluss 18 umfasst mehrere Verbindungsstücke 20, welche im Anschlussteil 3 vorgesehene Leitungen oder Kanäle mit einer oder mehreren Medienquellen verbindet, insbesondere mit einer Druckluftquelle, bevorzugt auch mit einer Flüssigkeitsquelle. Die Leitungen oder Kanäle durchsetzen den Anschlussteil 3 und übergeben, bevorzugt über die Kupplungsvorrichtung 19, das oder die Medien an das Handstück 2. Alternativ ist es selbstverständlich auch möglich, dass der Handgriff 1 nur das Handstück 2 aufweist und dass am versorgungsseitigen Ende des Handstücks 2 ein dem Anschluss 18 ähnlicher oder gleicher Anschluss an eine oder mehrere Medienquellen vorgesehen ist.

Ein im Weiteren noch detailliert beschriebener Steuer- oder Regelkreis 8 zur Begrenzung, Steuerung oder Regelung der Drehzahl eines Drehteils 4 auf einen Drehzahlwert ist, bevorzugt vollständig, im Handgriff 1 aufgenommen. Gemäß unterschiedlichen Ausführungsformen ist der Steuer- oder Regelkreis 8 entweder vollständig im Handstück 2 aufgenommen oder zumindest Teile des Steuer- oder Regelkreises 8, insbesondere ein Stellelement 10, bevorzugt ein Ventil 10A, befinden sich im Anschlussteil 3.

Das Handstück 2 umfasst einen gebogenen oder zwei gewinkelt zueinander angeordnete Abschnitte aufweisenden Griffteil 21 und einen daran anschließenden Kopfteil 2. Am Kopfteil 22 ist eine Werkzeugöffnung 23 (siehe Figur 2) vorgesehen, durch die ein Werkzeug lösbar in den Kopfteil 22 einsteckbar ist. Die Werkzeugöffnung 23 ist seitlich am Kopfteil 22 angeordnet, so dass das Werkzeug gewinkelt zum Griffteil 21 oder dessen Längsachse aus dem Kopfteil 22 ragt. An dem der Werkzeugöffnung 23 gegenüberliegenden Ende des Kopfteils 22 ist ein Drucktaster 24 vorgesehen, der mit einer im Kopfteil 22 angeordneten Werkzeuglösevorrichtung zusammenwirkt, um das Werkzeug aus dem Kopfteil 22 frei zu geben. Selbstverständlich können der Handgriff 1 oder das Handstück 2 auch andere bekannte Formen aufweisen, zum Beispiel pistolenförmig oder gerade ausgebildet sein.

Wie aus der Figur 2 zu erkennen ist, erstreckt sich durch das Handstück 2, insbesondere durch den Griffteil 21, eine Fluidleitung 5 zur Leitung des Antriebsfluids in Richtung des Kopfteils 22 oder zu einem in dem Kopfteil 22 angeordnetem Drehteil 4 und eine Fluidleitung 6 zur Leitung des Antriebsfluids vom Kopfteil 22 weg oder von dem in dem Kopfteil 22 angeordneten Drehteil 4 weg. Gegebenenfalls erstrecken sich weitere Medienleitungen, zum Beispiel eine oder mehrere Medienleitungen für Kühlmedien, Lichtleiter oder elektrische Leitungen durch das Handstück 2. Die Fluidleitung 5 fördert das Antriebsfluid, zum Beispiel Druckluft oder Wasser, zu einer Antriebseinheit 25, die zumindest ein in Drehung versetzbares Drehteil 4 umfasst, zum Beispiel ein Laufrad, einen Rotor eines Luft- oder Lamellenmotors, eine Welle, eine Spannvorrichtung für das Werkzeug etc.

Gemäß der Ausführungsform des Handstücks 2 nach Figur 2 umfasst das Drehteil 4 ein Laufrad 26 und eine Hohlwelle 27, an der das Laufrad 26 befestigt ist und in der eine Spannvorrichtung für das Werkzeug angeordnet ist oder die Teil der Spannvorrichtung ist. Das Drehteil 4 und das damit verbindbare Werkzeug sind durch zwei Wälzlager 28, 29 drehbar im Handstück 2 gelagert. Die Wälzlager 28, 29 sind an drehfesten Bauteilen des Handstücks 2, zum Beispiel der Außenhülse 30 (siehe Figur 1), gelagert.

Im Kopfteil 22 des Handstücks 2 ist ein elektrodynamischer Wandler oder Generator 9 vorgesehen, der einen Rotor und einen Stator umfasst. Der Stator wird durch zumindest eine, bevorzugt mehrere, Spulen 11 und bevorzugt einen weichmagnetischen Spulenkern, um den die Spulen 11 gewickelt sind, gebildet. Die Spulen 11 und der Spulenkern umgeben den ein Magnetelement 12 aufweisenden Rotor oder sind nahe des Rotors angeordnet. Der Rotor umfasst gemäß Figur 2 ein mit dem Drehteil 4 verbundenes und mit dem Drehteil 4 in Drehung versetzbares Magnetelement 12, insbesondere ein scheibenförmiges Magnetelement mit einer Bohrung, durch welche die Hohlwelle 27 ragt. Anstelle eines separaten Magnetelements ist es auch möglich, das Drehteil 4 oder einen Teil davon magnetisch auszubilden, zum Beispiel durch Aufmagnetisierung. Bevorzugt ist das Laufrad 26 zumindest teilweise magnetisch, insbesondere sind die Flügel des Laufrads 26 magnetisch.

Die Fluidleitung 5 endet nahe des Drehteils 4 oder des Laufrads 26 oder gibt das Antriebsfluid an das Drehteil 4, insbesondere das Laufrad 26, oder in einen Hohlraum des Kopfteils 22, in dem das Drehteil 4 oder das Laufrad 26 aufgenommen sind, ab. Durch Beaufschlagen des Laufrads 26 mit dem Antriebsfluid aus der Fluidleitung 5 wird das Laufrad 26 in Drehung versetzt und somit auch der elektrodynamische Wandler 9 aktiviert und in den Spulen 11 eine Spannung induziert. Die Höhe der in den Spulen 11 induzierten Spannung korreliert dabei mit der Drehzahl des Rotors, des Drehteils 4 und des Werkzeugs.

Der Generator 9 ist Teil des Steuer- oder Regelkreises 8 zur Begrenzung, Steuerung oder Regelung der Drehzahl des Drehteils 4 und / oder eines mit dem Drehteil 4 verbundenen Werkzeugs. Gemäß dem in der Figur 2 dargestellten Ausführungsbeispiel umfasst der Steuer- oder Regelkreis 8 neben dem Generator 9 ein mittels elektrischer Energie betreibbares Stellelement 10, eine Schalt- und / oder Steuervorrichtung 14 und elektrische Leitungen 31, 31A welche den Generator 9 mit der Schalt- und / oder Steuervorrichtung 14 und dem Stellelement 10 verbinden. Das als Ventil, insbesondere als Steuerventil oder Proportionalventil, ausgebildete Stellelement 10 wirkt mittels eines Stellvorgangs auf das in der Fluidleitung 5 fließende Antriebsfluid. Das Stellelement 10 verändert zum Beispiel den Fluiddruck oder den Volumenstrom des Antriebsfluids, insbesondere durch Veränderung des für das Antriebsfluid durchströmbaren Innendurchmessers der Fluidleitung 5, wodurch die Drehzahl des Drehteils 4 veränderbar ist.

Zur Durchführung des Stellvorgangs erhält das Stellelement 10 über die elektrischen Leitungen 31, 31A die von dem Generator 9 erzeugte elektrische Energie. Ein Teil der dem Drehteil 4 mittels des Antriebsfluids zugeführten Energie wird somit zum Betrieb des Stellelements 10 verwendet. Ist die Drehzahl des Drehteils 4 zu hoch, so verringert das Stellelement 10 die dem Drehteil 4 zugeführte Energie, zum Beispiel durch Verringern des Fluidrucks oder des Volumenstroms des Antriebsfluids, wodurch die Drehzahl des Drehteils 4 abnimmt. Ist die Drehzahl des Drehteils 4 zu niedrig, so erhöht das Stellelement 10 die dem Drehteil 4 zugeführte Energie, zum Beispiel durch Erhöhen des Fluiddrucks oder des Volumenstroms des Antriebsfluids, wodurch die Drehzahl des Drehteils 4 ansteigt.

Gemäß einem einfachen, nicht dargestellten Ausführungsbeispiel besteht der Steuer- oder Regelkreises 8 aus dem durch das Drehteil 4 antreibbaren Generator 9, dem Stellelement 10, den elektrischen Leitungen 31, 31A zur Verbindung des Generators 9 mit dem Stellelement 10 und einem Teil der Fluidleitung 5. Bevorzugt enthält der Steuer- oder Regelkreises 8 jedoch zusätzlich eine Schalt- und / oder Steuervorrichtung 14, welche das Stellelement 10 selektiv mit von dem Generator 9 erzeugter elektrischer Energie versorgt, insbesondere in Abhängigkeit von der Drehzahl des Drehteils 4 und welche insbesondere eine Vorrichtung 32 zur Ermittlung der Drehzahl des Drehteils 4 aufweist, so wie dies in Figur 2 gezeigt ist. Die in Figur 2 dargestellte Schalt- und / oder Steuervorrichtung 14 ist als Mikrocomputer oder Mikrocontroller 15 ausgebildet und elektrisch zwischen den Generator 9 und das Stellelement 10 geschaltet.

Der Mikrocontroller 15 erhält über die Leitungen 31A die vom Generator 9 erzeugte elektrische Energie und misst oder bestimmt einen aktuellen Parameter oder Wert der elektrischen Energie, welcher mit der Drehzahl des Drehteils 4 korreliert, zum Beispiel die Spannung oder die Stromstärke. Der Mikrocontroller 15 oder zumindest Teile des Mikrocontrollers 15 bestimmen somit die Drehzahl des Drehteils 4 und bilden die Vorrichtung 32 zur Ermittlung der Drehzahl des Drehteils 4. Im Mikrocontroller 15 ist des Weiteren zumindest ein Grenzwert für den aktuellen Parameter der elektrischen Energie gespeichert, so dass der Mikrocontroller 15 den aktuellen Parameter mit dem Grenzwert vergleichen kann und in Abhängigkeit des Verhältnisses des aktuellen Parameters zu dem Grenzwert das Stellelements 10 selektiv mit von dem Generator 9 erzeugter elektrischer Energie versorgt. Zum Beispiel versorgt die Schalt- und / oder Steuervorrichtung 14 das Stellelement 10 mit elektrischer Energie oder schließt den Stromkreis zwischen dem Generator 9 und dem Stellelement 10, wenn die Drehzahl des Drehteils 4 und somit der aktuelle Parameter der vom Generator 9 erzeugten elektrischen Energie den Grenzwert erreicht oder überschreitet. Alternativ unterbricht die Schalt- und / oder Steuervorrichtung 14 die Versorgung des Stellelements 10 mit elektrischer Energie oder öffnet den Stromkreis zwischen dem Generator 9 und dem Stellelement 10, wenn die Drehzahl des Drehteils 4 und somit der aktuelle Parameter der vom Generator 9 erzeugten elektrischen Energie den Grenzwert erreicht oder unterschreitet. Besonders bevorzugt ist das mittels elektrischer Energie betreibbare Stellelement 10 als Proportionalventil ausgebildet, wobei die Schalt- und / oder Steuervorrichtung 14 das Proportionalventil derart mit elektrischer Energie versorgt, dass dieses in Abhängigkeit der Drehzahl des Drehteils 4 einen stetigen Stellvorgang ausführt.

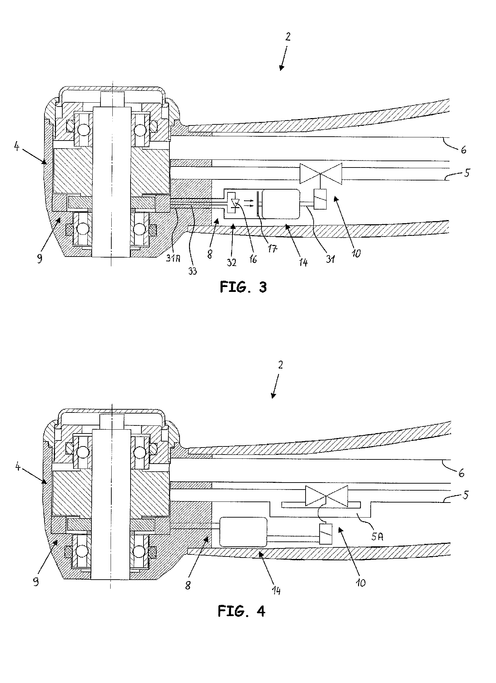

Die in den Figuren 3 - 8 gezeigten weiteren Ausführungsbeispiele von Handstücken mit einem Steuer- oder Regelkreis 8 zur Begrenzung, Steuerung oder Regelung der Drehzahl des Drehteils gleichen in vielen Punkten dem Aufbau und der Funktion des Handstücks 2 der Figur 2. Aus diesem Grund werden im Folgenden insbesondere jene Merkmale beschrieben, welche die Handstücke der Figuren 3 - 8 von dem Handstück 2 der Figur 2 unterscheiden.

Der Steuer- oder Regelkreis 8 des Handstücks 2 der Figur 3 unterscheidet sich durch eine alternative Ausführung der Schalt- und / oder Steuervorrichtung 14 und / oder durch eine alternative Ausführung der Vorrichtung 32 zur Ermittlung der Drehzahl des Drehteils 4: Die Vorrichtung 32 besteht aus einer Strahlungsquelle 16, zum Beispiel einer oder mehreren Leuchtdioden, und einem Strahlung empfangenden Sensor 17, zum Beispiel einer Photodiode. Die Strahlungsquelle 16 ist von dem elektrodynamischen Wandler 9 über die elektrischen Leitungen 33 mit elektrischer Energie versorgbar. Erreicht oder übersteigt die vom Generator 9 erzeugte elektrische Energie einen vorbestimmten Wert, zum Beispiel die Schaltspannung oder Durchlassspannung der Leuchtdiode, so emittiert die Strahlungsquelle 16 elektromagnetische Strahlung. Der Strahlung empfangende Sensor 17 ist derart angeordnet und ausgebildet ist, dass er diese von der Strahlungsquelle 16 emittierte Strahlung empfängt. Wenn der Sensor 17 detektiert, dass die Strahlungsquelle 16 Strahlung emittiert oder Strahlung emittiert, welche einen vorbestimmten Grenzwert überschreitet, so schließen der Strahlung empfangende Sensor 17 und / oder die Schalt- und / oder Steuervorrichtung 14 den Stromkreis zwischen dem Generator 9 und dem Stellelement 10, so dass das Stellelement 10 mit der von dem Generator 9 erzeugten elektrischen Energie versorgbar ist. Wenn die Strahlungsquelle 16 keine Strahlung emittiert oder wenn die Strahlungsquelle 16 Strahlung emittiert, welche einen vorbestimmten Grenzwert unterschreitet, so öffnet das Strahlung empfangenden Halbleiterelement 17 und / oder die Schalt- und / oder Steuervorrichtung 14 den Stromkreis zwischen dem Generator 9 und dem Stellelement 10, so dass das Stellelement 10 nicht mehr mit der von dem Generator 9 erzeugten elektrischen Energie versorgbar ist. Bevorzugt weist die Schalt- und / oder Steuervorrichtung 14 wiederum einen Mikrocontroller 15 auf, welcher die Signale des Sensors 17 verarbeitet und das Schließen des Stromkreises bewirkt. Das Stellelement 10, der Sensor 17 und / oder die Schalt- und / oder Steuervorrichtung 14 werden über die elektrischen Leitungen 31A mit von dem Generator 9 erzeugter elektrischer Energie versorgt.

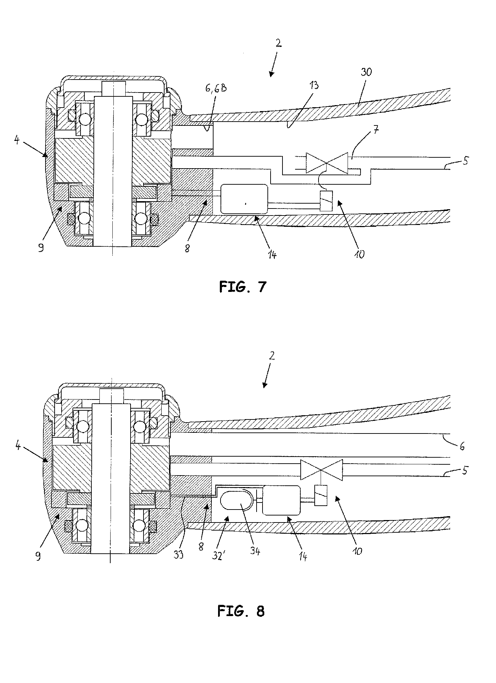

Die Vorrichtungen 32 der Figuren 2 und 3 nutzen somit jeweils (direkt oder indirekt) die von dem Generator 9 erzeugte elektrische Energie oder einen Wert davon zur Ermittlung der Drehzahl. Alternativ ist in der Figur 8 eine Vorrichtung 32' zur Ermittlung der Drehzahl des Drehteils 4 dargestellt, welche die Drehzahl des Drehteils 4 nicht von der von dem elektrodynamischen Wandler 9 erzeugten elektrischen Energie ableitet. Die Vorrichtung 32' umfasst einen Sensor zum Erfassen von Druckschwankungen im Antriebsfluid, zum Beispiel ein Mikrofon 34, das den vom Drehteil 4 emittierten und sich in Abhängigkeit der Drehzahl verändernden Schall oder Änderungen der Strömungsgeschwindigkeit des Antriebsfluids in den Fluidleitungen 5 oder 6 detektiert. Die Schalt- und / oder Steuervorrichtung 14, die bevorzugt wiederum einen Mikrocontroller 15 aufweist, verarbeitet die Signale der Vorrichtung 32', i.e. des Mikrofons 34, und schließt und öffnet oder bewirkt das Schließen und Öffnen des Stromkreises zwischen dem Generator 9 und dem Stellelement 10 in Abhängigkeit der Drehzahl des Drehteils 4 / der Signale der Vorrichtung 32'. Die vom Generator 9 erzeugte elektrische Energie dient gemäß diesem Ausführungsbeispiel somit der elektrischen Versorgung des Stellelements 10, der Schalt- und / oder Steuervorrichtung 14 und der Vorrichtung 32' (über die elektrischen Leitungen 33), jedoch nicht der Ermittlung der Drehzahl des Drehteils 4.

Die Vorrichtung 32' zur Ermittlung der Drehzahl des Drehteils 4, welche die Drehzahl des Drehteils 4 nicht von der von dem elektrodynamischen Wandler 9 erzeugten elektrischen Energie ableitet, kann alternativ auch durch andere Bauteile gebildet sein, zum Beispiel durch eine optische Erfassungsvorrichtung, welche eine von dem Drehteil 4 emittierte, reflektierte oder durch das Drehteil 4 geleitete Strahlung detektiert.

Das in der Figur 4 gezeigte Handstück 2 umfasst eine Fluidleitung 5 zur Leitung des Antriebsfluids zu dem Drehteil 4 und eine Nebenleitung 5A der Fluidleitung 5, welche das in der Fluidleitung 5 vorgesehene Stellelement 10 umgeht. Die Nebenleitung 5A entspringt bezogen auf die Fließrichtung des Antriebsfluids vor dem Stellelement 10 aus der Fluidleitung 5 und mündet nach dem Stellelement 10 wieder in die Fluidleitung 5. Alternativ ist es auch denkbar, die Nebenleitung 5A getrennt von der Fluidleitung 5 bis zu dem Drehteil 4 zu führen. Zumindest ein Teil des Antriebsfluids ist somit an dem Stellelement 10 vorbeileitbar, wodurch ein ruhiger, gleichmäßigerer Antrieb des Drehteils 4 erreicht wird. Selbstverständlich ist es auch möglich, das Stellelement 10 in der Nebenleitung 5A vorzusehen.

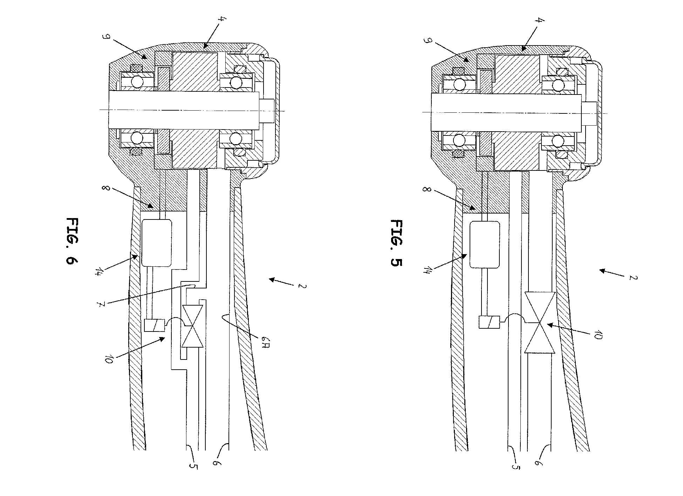

Bei dem Ausführungsbeispiel des Handstücks 2 gemäß Figur 5 ist das Stellelement 10, das wiederum bevorzugt als Ventil ausgebildet ist, in der Fluidleitung 6 zur Leitung des Antriebsfluids vom Drehteil 4 oder Kopfteil 22 weg angeordnet.

Die in den Figuren 6 und 7 gezeigten Handstücke 2 weisen jeweils eine Fluidzweigleitung 7 auf, welche die Fluidleitung 5 zur Leitung des Antriebsfluids zu dem Drehteil 4 und die Fluidleitung 6 zur Leitung des Antriebsfluids von dem Drehteil 4 verbindet oder kurz schließt. Das Stellelement 10, das bevorzugt als Ventil ausgebildet ist, ist in oder an der Fluidzweigleitung 7 vorgesehen. Ist das Stellelement 10 nicht vollständig geschlossen, so fließt ein Teil des Antriebsfluids direkt von der Fluidleitung 5 in die Fluidleitung 6. Bei dem Handstück 2 gemäß der Figur 6 mündet die Fluidzweigleitung 7 in einen als Rohrleitung ausgebildeten Abschnitt 6A der Fluidleitung 6 oder ist mit selbigem verbunden.

Bei dem Handstück 2 der Figur 7 umfasst die Fluidleitung 6 zur Leitung des Antriebsfluids von dem Drehteil 4 nur einen kurzen rohrartig ausgebildeten Abschnitt 6B und wird im Folgenden durch die Außenhülse 30 des Handstücks 2 gebildet. Das verbrauchte oder vom Drehteil 4 wegfließende Antriebsfluid strömt somit durch den Hohlraum 13 in der Außenhülse 30. Die Fluidzweigleitung 7 mündet gemäß diesem Ausführungsbeispiel ebenfalls in den Hohlraum 13.

Bei den in den Figuren 2 - 8 dargestellten Ausführungsbeispielen versorgt der elektrodynamische Wandler 9 alle Bauteile des Steuer- oder Regelkreises 8 mit elektrischer Energie, insbesondere das Stellelement 10, die Schalt- und / oder Steuervorrichtung 14 und die Vorrichtung 32 zur Ermittlung der Drehzahl des Drehteils 4. Der Steuer- oder Regelkreis 8 oder der Handgriff 1 benötigen somit keine elektrischen Kontakte oder Leitungen, welche den Handgriff 1 mit einer externen, d.h. außerhalb des Handgriffs 1 gelegenen, elektrischen Energiequelle verbindet.

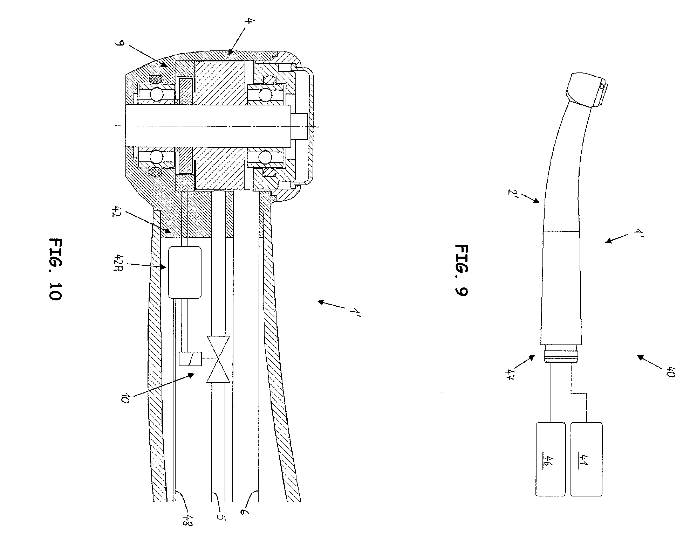

Im Gegensatz dazu sind die in den Figuren 9 - 11 dargestellten Behandlungsvorrichtung 40 und Handgriffe 1' derart aufgebaut, dass zumindest gemäß bestimmten Ausführungsformen deren Steuer- oder Regelkreis zumindest zum Teil mit elektrischer Energie betreibbar ist, welche von einer nicht durch den Generator 9 gebildeten elektrischen Energiequelle stammt, insbesondere von einer elektrischen Energiequelle außerhalb des Handgriffs 1 '. Die Behandlungsvorrichtung 40 und Handgriffe 1' der Figuren 9 - 11 weisen somit auch einen eigenen, von den im Vorherstehenden beschriebenen Handgriffen unabhängigen erfinderischen Aspekt auf.

Die medizinische, insbesondere dentale, Behandlungsvorrichtung 40 umfasst einen Handgriff 1', ein im Handgriff 1' vorgesehenes und durch ein Antriebsfluid in Drehung versetzbares Drehteil 4 zum Antrieb eines mit dem Drehteil 4 verbindbaren Werkzeugs, eine Vorrichtung 42, 42A zur Ermittlung der Drehzahl des Drehteils 4 und eine Steuer- und / oder Regelvorrichtung 41 zur Steuerung und / oder Regelung der Drehzahl des Drehteils 4, welche ausgebildet ist, die von der Vorrichtung 42 zur Ermittlung der Drehzahl ermittelte Drehzahl des Drehteils 4 mit einem Vorgabewert zu vergleichen und bei Abweichen der ermittelten Drehzahl von dem Vorgabewert ein Stellelement 10 zu betreiben, welches auf das Antriebsfluid einwirkt, um die Drehzahl des Drehteils 4 auf den Vorgabewert zu begrenzen oder dem Vorgabewert anzunähern, wobei das Stellelement 10 als ein mit elektrischer Energie betreibbares Stellelement 10 ausgebildet ist, das im Handgriff 1' angeordnet ist.

Der große Vorteil der Anordnung des Stellelements 10 in dem Handgriff 1' besteht darin, dass die Entfernung zwischen dem Stellelement 10 und dem Drehteil 4 sehr gering ist, wodurch die Totzeit, also die Zeitspanne zwischen der Änderung der Drehzahl und der Reaktion des Stellelements darauf, ebenfalls sehr gering ist. Damit wird in vorteilhafter Weise ein stabiler Betrieb der Behandlungsvorrichtung 40 erzielt, insbesondere ohne Gefahr des Aufschwingens des Steuer- oder Regelkreises. Bevorzugt ist der gesamte Steuer- oder Regelkreis, welcher insbesondere die Vorrichtung 42, 42A zur Ermittlung der Drehzahl des Drehteils 4, die Steuer- und / oder Regelvorrichtung 41 und das Stellelement 10 umfasst, mit elektrischer Energie und mit elektrischen Signalen betreibbar, wodurch der Betrieb des Steuer- oder Regelkreises noch beschleunigt wird oder die Totzeit noch weiter abnimmt.

Gemäß einem Ausführungsbeispiel ist das Stellelement 10 als Ventil, insbesondere als Steuerventil, Magnetventil oder Proportionalventil, oder als Drossel ausgebildet.

Die in der Figur 9 dargestellte medizinische, insbesondere dentale, Behandlungsvorrichtung 40 umfasst einen Handgriff 1', der im Wesentlichen gleich aufgebaut ist wie der in Figur 1 dargestellte Handgriff 1. Der Handgriff 1' umfasst entweder nur ein Handstück 2', welches über eine Kupplungsvorrichtung 47 lösbar zumindest mit einer Fluidquelle 46 und gegebenenfalls auch zumindest mit Teilen der Steuer- und / oder Regelvorrichtung 41 verbunden ist, so wie dies in der Figur 9 dargestellt ist, oder alternativ ein Handstück 2' und ein davon lösbares Anschlussteil 3, so wie dies in der Figur 1 zu erkennen ist.

Gemäß einem Ausführungsbeispiel umfasst die medizinische, insbesondere dentale, Behandlungsvorrichtung 40 des Weiteren eine Energiequelle, welche elektrische Energie zum Betreiben des Stellelements 10 zur Verfügung stellt, wobei die Energiequelle entweder im Handgriff 1' oder außerhalb des Handgriffs 1' vorgesehen ist. Ist die Energiequelle im Handgriff 1' angeordnet, so umfasst sie zum Beispiel eine Batterie oder einen wiederaufladbaren Akkumulator oder einen durch das Antriebsfluid antreibbaren elektrodynamischen Wandler 9. Der elektrodynamischen Wandler 9 oder Generator ist bevorzugt direkt oder indirekt durch das Drehteil 4 antreibbar, so wie dies in Figur 10 dargestellt ist.

Der Generator 9 des Handgriffs 1' der Figur 10 dient jedoch nicht nur oder nicht primär der Energieversorgung des Stellelements 10, sondern ist vor allem (aufgrund der im Vorstehenden bereits beschriebenen Korrelation zwischen der Drehzahl des Drehteils 4 und der durch den Generator 9 erzeugten elektrischen Energie) Teil der Vorrichtung 42 zur Ermittlung der Drehzahl des Drehteils 4. Bevorzugt dient die vom elektrodynamischen Wandler 9 erzeugte elektrische Energie ausschließlich der Ermittlung der Drehzahl des Drehteils 4. In anderen Worten weist die Vorrichtung 42 zur Ermittlung der Drehzahl des Drehteils 4 somit einen durch das Drehteil 4 antreibbaren elektrodynamischen Wandler 9 auf, so dass die Drehzahl des Drehteils 4 von der von dem elektrodynamischen Wandler 9 erzeugten elektrischen Energie ableitbar ist. Die Vorrichtung 42 ist über elektrische Leitungen 48 mit der Steuer- und / oder Regelvorrichtung 41 verbunden und sendet entweder direkt die vom Generator 9 erzeugte elektrische Energie an die Steuer- und / oder Regelvorrichtung 41 oder modifiziert mittels eines Bauteils 42A die vom Generator 9 erzeugte elektrische Energie. Das Bauteil 42A ist zum Beispiel als Verstärker, Gleichrichter, Filter, Analog-Digital-Wandler oder Mikrocontroller ausgebildet. Die vom Bauteil 42A modifizierte elektrische Energie wird anschließend, insbesondere in Form eines elektrischen Drehzahlsignals, über die elektrischen Leitungen 48 an die Steuer- und / oder Regelvorrichtung 41 geleitet.

Die Steuer- und / oder Regelvorrichtung 41 vergleicht die von der Vorrichtung 42 erhaltene elektrische Energie oder das Drehzahlsignal mit einem fixen oder durch den Anwender veränderbaren Drehzahl-Vorgabewert und betreibt bei Abweichen der ermittelten Drehzahl von dem Vorgabewert mittels einem, insbesondere elektrischen, Steuer- oder Regelsignal das Stellelement 10 derart, dass dieses auf das Antriebsfluid einwirkt, um die Drehzahl des Drehteils 4 dem Drehzahl-Vorgabewert anzunähern oder darauf zu begrenzen, so wie dies ebenfalls im Vorstehenden bereits beschrieben wurde.

Dient die vom elektrodynamischen Wandler 9 erzeugte elektrische Energie ausschließlich der Ermittlung der Drehzahl des Drehteils 4, so umfasst die Behandlungsvorrichtung 40 eine separate elektrische Energiequelle, die über (nicht dargestellte elektrische Leitungen) das Stellelement 10 und gegebenenfalls auch die Vorrichtung 42 zur Ermittlung der Drehzahl des Drehteils 4, insbesondere das Bauteil 42A, mit elektrischer Energie versorgt. Bevorzugt ist diese elektrische Energiequelle außerhalb des Handgriffs 1' angeordnet, insbesondere ist sie als Teil der Steuer- und / oder Regelvorrichtung 41 ausgebildet, wobei gegebenenfalls die elektrischen Leitungen 48 auch zur Übertragung der elektrischen Energie verwendbar sind. Besonders bevorzugt ist eine lösbare elektrische Verbindung zwischen dem Stellelement 10 und der elektrischen Energiequelle vorgesehen, insbesondere als Teil der Kupplungsvorrichtung 47, zum Beispiel elektrische Schleifkontakte oder elektrische Steckkontakte.

Alternativ ist es auch denkbar, die Steuer- und / oder Regelvorrichtung 41 zur Steuerung und / oder Regelung der Drehzahl des Drehteils 4 vollständig im Handgriff 1' vorzusehen, zum Beispiel in dem Bauteil 42A oder als Teil des Bauteils 42A. Bevorzugt dient der Generator 9 oder die von Generator 9 erzeugte elektrische Energie wiederum ausschließlich der Ermittlung der Drehzahl des Drehteils 4, so dass in diesem Fall die elektrischen Leitungen 48 insbesondere der Versorgung der Steuer- und / oder Regelvorrichtung 41, der Vorrichtung 42 zur Ermittlung der Drehzahl des Drehteils 4 und des Stellelements 10 mit elektrischer Energie dienen. Besonders bevorzugt ist die elektrische Energie von einer Energiequelle außerhalb des Handgriffs 1' zur Verfügung gestellt.

Gemäß einem alternativen Ausführungsbeispiel weist die Vorrichtung 42 zur Ermittlung der Drehzahl des Drehteils 4 einen Sensor zum Erfassen von Druckschwankungen im Antriebsfluid auf, insbesondere ein Mikrofon 34, das den vom Drehteil 4 emittierten und sich in Abhängigkeit der Drehzahl verändernden Schall oder Änderungen der Strömungsgeschwindigkeit des Antriebsfluids detektiert. Der Aufbau der Vorrichtung 42 entspricht dem in der Figur 8 beschriebenen Aufbau der Vorrichtung 32.

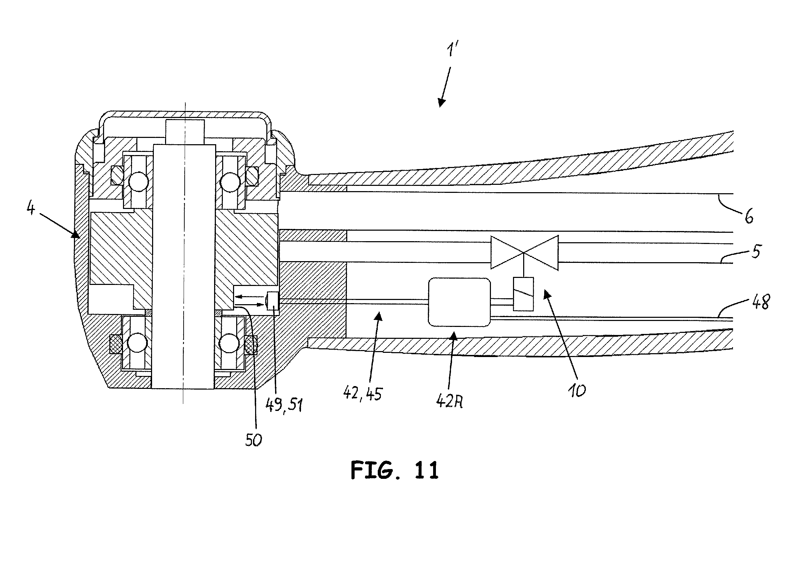

Gemäß einem weiteren Ausführungsbeispiel ist die Vorrichtung 42 zur Ermittlung der Drehzahl des Drehteils 4 durch eine optische Erfassungsvorrichtung 45 gebildet, welche zum Beispiel eine von dem Drehteil 4 emittierte, reflektierte oder durch das Drehteil 4 geleitete Strahlung detektiert (siehe Figur 11). Die Vorrichtung 42 umfasst zum Beispiel eine Strahlungsquelle 49, insbesondere eine Leuchtdiode, die Strahlung in Richtung des Drehteils 4 emittiert. An dem Drehteil ist ein Reflektor 50 vorgesehen, zum Beispiel ein reflektierender Metallstreifen, der zumindest einen Teil der Strahlung zu einem Strahlungssensor 51, zum Beispiel einem optischen Halbleiter, insbesondere einer Photodiode, reflektiert. Durch die vom Reflektor 50 reflektierte und vom Sensor 51 detektierte Strahlung wird der Sensor angeregt, ein Sensorsignal abzugeben, welches mit der Drehzahl korrespondiert. Wie unter Bezug auf die Figur 9 beschrieben, kann optional wiederum das Bauteil 42A vorgesehen sein, das das Sensorsignal modifiziert. Das Sensorsignal wird an die Steuer- und / oder Regelvorrichtung 41 weitergeleitet, welche auf Basis des Sensorsignals die Drehzahl ermittelt, mit einem Drehzahl-Vorgabewert vergleicht und bei Abweichen der ermittelten Drehzahl von dem Vorgabewert mittels einem, insbesondere elektrischen, Steuer- oder Regelsignal das Stellelement 10 betreibt.

Die Versorgung des Stellelements 10, der Vorrichtung 42 zur Ermittlung der Drehzahl des Drehteils 4 und gegebenenfalls des Bauteils 42A, welches bevorzugt auch die Steuer- und / oder Regelvorrichtung 41 umfasst, mit elektrischer Energie erfolgt durch eine, bevorzugt außerhalb des Handgriffs 1' vorgesehene, elektrische Energiequelle über die elektrischen Leitungen 48.

Gemäß einem Ausführungsbeispiel ist die Steuer- und / oder Regelvorrichtung 41 zur Steuerung und / oder Regelung der Drehzahl des Drehteils 4 zumindest teilweise außerhalb des Handgriffs 1' vorgesehen.

In den Figuren 10 und 11 ist das Stellelement 10 jeweils in oder an der Fluidleitung 5 zur Leitung des Antriebsfluids von der Fluidquelle 46 zu dem Drehteil 4 angeordnet. Selbstverständlich ist es auch möglich, das Stellelement 10 an der Fluidleitung 6 zur Ableitung des Antriebsfluids von dem Drehteil 4 oder an einer Fluidzweigleitung, welche die beiden Fluidleitungen 5, 6 verbindet (siehe Figuren 5 und 6), vorzusehen.

In den Figuren 10 und 11 ist das Stellelement 10 jeweils im Handstück 2' aufgenommen. Klarerweise ist es auch möglich, das Stellelement 10 im Anschlussteil 3 des Handgriffs 1' vorzusehen.

Die Erfindung ist nicht auf die dargestellten Ausführungsbeispiele beschränkt, sondern umfasst alle Ausführungen, die das prinzipielle, sinngemäße Funktionsprinzip der Erfindung anwenden oder beinhalten. Des Weiteren sind alle Merkmale aller beschriebenen und dargestellten Ausführungsbeispiele miteinander kombinierbar.

## Patentansprüche

1. Medizinischer, insbesondere dentaler, fluidbetriebener Handgriff (1), umfassend: Ein durch ein Antriebsfluid in Drehung versetzbares Drehteil (4) zum Antrieb eines mit dem Drehteil (4) verbindbaren Werkzeugs, eine Fluidleitung (5, 6) zur Leitung des Antriebsfluids zu dem oder von dem Drehteil (4) oder eine Fluidzweigleitung (7), die mit einer Fluidleitung (5, 6) zur Leitung des Antriebsfluids zu dem oder von dem Drehteil (4) verbunden ist, und einen Steuer- oder Regelkreis (8), welcher ausgebildet ist, die Drehzahl des Drehteils (4) zu begrenzen oder zu steuern oder zu regeln, **dadurch gekennzeichnet, dass**
der Steuer- oder Regelkreis (8) aufweist: Einen durch das Drehteil (4) angetriebenen elektrodynamischen Wandler (9) zur Erzeugung elektrischer Energie und zumindest ein Stellelement (10), welches ausgebildet ist, auf das in der Fluidleitung (5, 6) oder der Fluidzweigleitung (7) fließende Antriebsfluid einzuwirken, wobei das zumindest eine Stellelement (10) mit dem elektrodynamischen Wandler (9) elektrisch derart verbunden ist, dass das zumindest eine Stellelement (10) zur Durchführung eines Stellvorgangs mit der von dem elektrodynamischen Wandler (9) erzeugten elektrischen Energie versorgbar ist.

2. Medizinischer, insbesondere dentaler, fluidbetriebener Handgriff (1), nach Anspruch 1, **dadurch gekennzeichnet, dass**
der elektrodynamische Wandler (9) zumindest eine Spule (11) und ein Magnetelement (12) umfasst, wobei bevorzugt das Magnetelement (12) am Drehteil (4) vorgesehen ist, so dass das Magnetelement (12) durch das Drehteil (4) in Drehung versetzbar ist.

3. Medizinischer, insbesondere dentaler, fluidbetriebener Handgriff (1), nach Anspruch 2, **dadurch gekennzeichnet, dass**
die zumindest eine Spule (11) um einen weichmagnetischen Spulenkern gewickelt ist.

4. Medizinischer, insbesondere dentaler, fluidbetriebener Handgriff (1), nach einem der vorherstehenden Ansprüche, **dadurch gekennzeichnet, dass**
das Stellelement (10) als Ventil (10A), insbesondere als Steuerventil oder als Proportionalventil, oder als Drossel ausgebildet ist.

5. Medizinischer, insbesondere dentaler, fluidbetriebener Handgriff (1), nach einem der vorherstehenden Ansprüche, **dadurch gekennzeichnet, dass**
die Fluidzweigleitung (7) die Fluidleitung (5) zur Leitung des Antriebsfluids zu dem Drehteil (4) und die Fluidleitung (6) zur Leitung des Antriebsfluids von dem Drehteil (4) verbindet oder dass die Fluidzweigleitung (7) an der Fluidleitung (5) zur Leitung des Antriebsfluids zu dem Drehteil (4) entspringt und in einen Hohlraum (13) einer hohlen Außenhülse des Handgriffs (1) mündet.

6. Medizinischer, insbesondere dentaler, fluidbetriebener Handgriff (1), nach einem der Ansprüche 1 - 4, **dadurch gekennzeichnet, dass**
die Fluidleitung (5, 6) zur Leitung des Antriebsfluids zu dem oder von dem Drehteil (4) eine Nebenleitung (5A) aufweist, welche das Stellelement (10) umgeht, so dass zumindest eine Teil des Antriebsfluids an dem Stellelement (10) vorbeileitbar ist.

7. Medizinischer, insbesondere dentaler, fluidbetriebener Handgriff (1), nach einem der vorherstehenden Ansprüche, **dadurch gekennzeichnet, dass**
der Steuer- oder Regelkreis (8) eine Schalt- und / oder Steuervorrichtung (14) aufweist, welche zur selektiven Versorgung des zumindest einen Stellelements (10) mit vom elektrodynamischen Wandler (9) erzeugter elektrischer Energie in Abhängigkeit von der Drehzahl des Drehteils (4) ausgebildet ist.

8. Medizinischer, insbesondere dentaler, fluidbetriebener Handgriff (1), nach Anspruch 7, **dadurch gekennzeichnet, dass**
die Schalt- und / oder Steuervorrichtung (14) eine Vorrichtung (32, 32') zur Ermittlung der Drehzahl des Drehteils (4) aufweist.

9. Medizinischer, insbesondere dentaler, fluidbetriebener Handgriff (1), nach Anspruch 7 oder 8, **dadurch gekennzeichnet, dass**
die Schalt- und / oder Steuervorrichtung (14) einen Mikrocontroller (15) umfasst, welcher elektrisch mit dem elektrodynamischen Wandler (9) verbunden ist und welcher ausgebildet ist, einen Wert der von dem elektrodynamischen Wandler (9) erzeugten elektrischen Energie mit einem vorbestimmten Grenzwert zu vergleichen und die Versorgung des Stellelements (10) mit von dem elektrodynamischen Wandler (9) erzeugter elektrischer Energie zuzulassen, wenn der Wert der von dem elektrodynamischen Wandler (9) erzeugten elektrischen Energie den vorbestimmten Grenzwert erreicht oder überschreitet.

10. Medizinischer, insbesondere dentaler, fluidbetriebener Handgriff (1), nach Anspruch 7 oder 8, **dadurch gekennzeichnet, dass**
die Schalt- und / oder Steuervorrichtung (14) eine Strahlungsquelle (16) und einen Strahlung empfangenden Sensor (17), insbesondere ein Halbleiterelement, zum Beispiel eine Photodiode, umfasst, wobei die Strahlungsquelle (16) von dem elektrodynamischen Wandler (9) mit elektrischer Energie versorgbar ist und der Sensor (17) derart angeordnet ist, dass er von der Strahlungsquelle (16) emittierte Strahlung empfängt, so dass ein Stromkreis zwischen dem elektrodynamischen Wandler (9) und dem Stellelement (10) schließbar ist und das Stellelement (10) mit von dem elektrodynamischen Wandler (9) erzeugter elektrischer Energie versorgbar ist, wenn der Sensor (17) detektiert, dass die Strahlungsquelle (16) Strahlung emittiert oder Strahlung emittiert, welche einen vorbestimmten Grenzwert überschreitet.

11. Medizinischer, insbesondere dentaler, fluidbetriebener Handgriff (1), nach einem der Ansprüche 7 - 10, **dadurch gekennzeichnet, dass**
der elektrodynamische Wandler (9) mehrere Spulen (11) umfasst, wobei zumindest eine erste Spule (11) ausschließlich für die Versorgung des Stellelements (10) mit elektrischer Energie vorgesehen ist und wobei zumindest eine zweite Spule (11) ausschließlich für die Versorgung der Schalt- und / oder Steuervorrichtung (14) mit elektrischer Energie vorgesehen ist, insbesondere zur Erzeugung eines Schalt- und / oder Steuersignals für das Stellelement (10).

12. Medizinischer, insbesondere dentaler, fluidbetriebener Handgriff (1), nach einem der vorherstehenden Ansprüche, **dadurch gekennzeichnet, dass**
der Steuer- oder Regelkreis (8) eine Vorrichtung zum Gleichrichten der von dem elektrodynamischen Wandler (9) erzeugten elektrischen Energie aufweist, so dass das Stellelement (10) und bevorzugt auch die Schalt- und / oder Steuervorrichtung (14) mit Gleichstrom versorgbar sind.

13. Medizinischer, insbesondere dentaler, fluidbetriebener Handgriff (1), nach einem der vorherstehenden Ansprüche, **dadurch gekennzeichnet, dass**
der gesamte Steuer- oder Regelkreis (8) im Handgriff (1) und / oder in einem an den Handgriff (1) anschließbaren Anschlussteil (3), insbesondere in einem Adapter oder in einem Kupplungselement, aufgenommen ist und das Stellelement (10), und bevorzugt auch die Schalt- und / oder Steuervorrichtung (14), von einer außerhalb des Handgriffs (1) und / oder des Anschlussteils (3) angeordneten elektrischen Energiequelle unabhängig ist.

14. Medizinischer, insbesondere dentaler, fluidbetriebener Handgriff (1), nach einem der vorherstehenden Ansprüche, **dadurch gekennzeichnet, dass**
der Steuer- oder Regelkreis (8) ausgebildet ist, die Drehzahl des Drehteils (4) und des damit verbindbaren Werkzeugs auf einen Wert im Bereich von etwa 300.000 - 150.000 Umdrehungen pro Minute, bevorzugt auf einen Wert im Bereich von etwa 275.000 - 200.000 Umdrehungen pro Minute, besonders bevorzugt auf in etwa 250.000 Umdrehungen pro Minute zu begrenzen, zu steuern oder zu regeln.

15. Verfahren zur Begrenzung, Steuerung oder Regelung der Drehzahl eines medizinischen, insbesondere dentalen, fluidbetriebenen Handgriffs (1) nach einem der vorherstehenden Ansprüche, **dadurch gekennzeichnet dass**,
der durch das Drehteil (4) angetriebenen elektrodynamischen Wandler (9) elektrische Energie erzeugt und dass das Stellelement (10) auf das in der Fluidleitung (5, 6) oder der Fluidzweigleitung (7) fließende Antriebsfluid einwirkt, um die Drehzahl zu begrenzen, zu steuern oder zu regeln, wobei das zumindest eine Stellelement (10) mit dem elektrodynamischen Wandler (9) elektrisch derart verbunden ist, dass das zumindest eine Stellelement (10) zur Durchführung eines Stellvorgangs mit der von dem elektrodynamischen Wandler (9) erzeugten elektrischen Energie versorgt wird.

16. Medizinische, insbesondere dentale, Behandlungsvorrichtung (40), umfassend: Einen Handgriff (1'), ein im Handgriff (1') vorgesehenes und durch ein Antriebsfluid in Drehung versetzbares Drehteil (4) zum Antrieb eines mit dem Drehteil (4) verbindbaren Werkzeugs, eine Vorrichtung (42) zur Ermittlung der Drehzahl des Drehteils (4) und eine Steuer- und / oder Regelvorrichtung (41) zur Steuerung und / oder Regelung der Drehzahl des Drehteils (4), welche ausgebildet ist, die von der Vorrichtung (42) zur Ermittlung der Drehzahl ermittelte Drehzahl des Drehteils (4) mit einem Vorgabewert zu vergleichen und bei Abweichen der ermittelten Drehzahl von dem Vorgabewert ein Stellelement (10) zu betreiben, welches auf das Antriebsfluid einwirkt, um die Drehzahl des Drehteils (4) dem Vorgabewert anzunähern, **gekennzeichnet durch**
ein mit elektrischer Energie betreibbares Stellelement (10), das im Handgriff (1') angeordnet ist.

17. Medizinische, insbesondere dentale, Behandlungsvorrichtung (40), nach Anspruch 16, **gekennzeichnet durch**
eine Energiequelle, welche elektrische Energie zum Betreiben des Stellelements (10) zur Verfügung stellt, wobei die Energiequelle im Handgriff (1') vorgesehen ist.

18. Medizinische, insbesondere dentale, Behandlungsvorrichtung (40), nach Anspruch 17, **dadurch gekennzeichnet, dass**
die Energiequelle eine Batterie oder einen wiederaufladbaren Akkumulator umfasst.

19. Medizinische, insbesondere dentale, Behandlungsvorrichtung (40), nach Anspruch 17, **dadurch gekennzeichnet, dass**
die Energiequelle einen durch das Antriebsfluid antreibbaren elektrodynamischen Wandler (9) umfasst.

20. Medizinische, insbesondere dentale, Behandlungsvorrichtung (40), nach Anspruch 17 oder 19, **dadurch gekennzeichnet, dass**
der elektrodynamischen Wandler (9) direkt oder indirekt durch das Drehteil (4) antreibbar ist.

21. Medizinische, insbesondere dentale, Behandlungsvorrichtung (40), nach Anspruch 16, **gekennzeichnet durch**
eine Energiequelle, welche elektrische Energie zum Betreiben des Stellelements (10) zur Verfügung stellt, wobei die Energiequelle außerhalb des Handgriffs (1') vorgesehen ist.

22. Medizinische, insbesondere dentale, Behandlungsvorrichtung (40), nach Anspruch 21, **gekennzeichnet durch**
eine lösbare elektrische Verbindung zwischen dem Stellelement (10) und der Energiequelle, zum Beispiel elektrische Schleifkontakte oder elektrische Steckkontakte.

23. Medizinische, insbesondere dentale, Behandlungsvorrichtung (40), nach einem der Ansprüche 16 - 22, **dadurch gekennzeichnet, dass**
die Vorrichtung (42) zur Ermittlung der Drehzahl des Drehteils (4) einen durch das Drehteil (4) antreibbaren elektrodynamischen Wandler (9) aufweist, so dass die Drehzahl des Drehteils (4) von der von dem elektrodynamischen Wandler (9) erzeugten elektrischen Energie ableitbar ist.

24. Medizinische, insbesondere dentale, Behandlungsvorrichtung (40), nach einem der Ansprüche 16 - 22, **dadurch gekennzeichnet, dass**
die Vorrichtung (42) zur Ermittlung der Drehzahl des Drehteils (4) einen Sensor zum Erfassen von Druckschwankungen im Antriebsfluid, insbesondere ein Mikrofon (34), das den vom Drehteil (4) emittierten und sich in Abhängigkeit der Drehzahl verändernden Schall oder Änderungen der Strömungsgeschwindigkeit des Antriebsfluids detektiert, oder durch eine optische Erfassungsvorrichtung (45), welche zum Beispiel eine von dem Drehteil (4) emittierte, reflektierte oder durch das Drehteil (4) geleitete Strahlung detektiert, umfasst.

25. Medizinische, insbesondere dentale, Behandlungsvorrichtung (40), nach einem der Ansprüche 16 - 24, **dadurch gekennzeichnet, dass**
die Steuer- und / oder Regelvorrichtung (41) zur Steuerung und / oder Regelung der Drehzahl des Drehteils (4) vollständig im Handgriff (1') aufgenommen ist.

26. Medizinische, insbesondere dentale, Behandlungsvorrichtung (40), nach einem der Ansprüche 16 - 24, **dadurch gekennzeichnet, dass**
die Steuer- und / oder Regelvorrichtung (41) zur Steuerung und / oder Regelung der Drehzahl des Drehteils (4) zumindest teilweise außerhalb des Handgriffs (1') vorgesehen ist.

27. Medizinische, insbesondere dentale, Behandlungsvorrichtung (40), nach einem der Ansprüche 16 - 26, **dadurch gekennzeichnet, dass**
das Stellelement (10) als Ventil, insbesondere als Steuerventil, Magnetventil oder Proportionalventil, oder als Drossel ausgebildet ist.

28. Medizinische, insbesondere dentale, Behandlungsvorrichtung (40), nach einem der Ansprüche 16 - 27, **gekennzeichnet durch**
eine Fluidleitung (5) zur Leitung des Antriebsfluids von einer Fluidquelle (46) zu dem Drehteil (4) und / oder eine Fluidleitung (6) zur Ableitung des Antriebsfluids von dem Drehteil (4) und / oder eine Fluidzweigleitung (7), welche die beiden Fluidleitungen (5, 6) verbindet, wobei das Stellelement (10) an einer der Fluidleitung (5, 6) oder der Fluidzweigleitung (7) vorgesehen ist.

29. Medizinische, insbesondere dentale, Behandlungsvorrichtung (40), nach einem der Ansprüche 16 - 28, **dadurch gekennzeichnet, dass**
der Handgriff (1') ein Handstück (2'), welches das Drehteil (4) umfasst, und ein davon lösbares Anschlussteil (3) aufweist, wobei das Stellelement (10) im Handstück (2') oder im Anschlussteil (3) aufgenommen ist.
